# FASCICULE DE BREVET EUROPEEN

(11) **EP 3 708 425 B1**
(45) Date de publication et mention de la délivrance du brevet: **11.05.2022**
(21) Numéro de dépôt: 20162817.9
(22) Date de dépôt: 12.03.2020
(51) Int. Cl.: B60N 2/824, B60N 2/894, B60N 2/818

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 12.03.2019 FR 1902520
(43) Date de publication de la demande: 16.09.2020
(73) Titulaire: TESCA France, 75008 Paris (FR)
(72) Inventeur: GEORGES, Laurent, 08190 Roizy (FR); LEFEVRE, Steve, 75008 Paris (FR)
(74) Mandataire: Sayettat, Julien Christian

(56) Documents cités:
- EP-A1- 0 965 482
- EP-A1- 3 357 749
- FR-A1- 3 063 689

## Description

L'invention concerne un appui-tête de siège de véhicule automobile.

Il est connu dans le document FR-A-3 063 689 de réaliser un appui-tête de siège de véhicule automobile, ledit appui-tête comprenant :
- deux tiges métalliques parallèles, et séparées l'une de l'autre, destinées à être montées en haut de dossier dudit siège,
- un boitier en matériau plastique moulé d'absorption d'énergie en cas de choc de la tête d'un passager, ledit boitier présentant deux conduits, issus de moulage, chacun desdits conduits recevant une desdites tiges respective en coulissement, de manière à permettre un réglage en hauteur dudit boitier, chacun desdits conduits étant pourvu d'un palier haut et d'un palier bas exerçant tous deux un contact serrant sur chacune desdites tiges.

On précise ici que le fait que les tiges soient séparées signifie qu'elles ne sont pas reliées de manière fixe l'une à l'autre, comme ce peut être le cas quand une traverse, par exemple métallique, relie leurs extrémités supérieures.

Des tiges séparées peuvent présenter une certaine capacité de débattement l'une par rapport à l'autre.

On s'affranchit de la sorte, dans une certaine mesure, des problèmes de dilatation transversale du boitier avec la chaleur qui pourraient nuire au bon coulissement dudit boitier par rapport aux tiges.

Le contact serrant exercé par les paliers sur les tiges permet de limiter les bruits de vibrations, et aussi le risque d'arc-boutement pouvant nuire au bon coulissement du boitier sur lesdites tiges lorsque l'on opère son réglage en hauteur.

Selon des réalisations connues, les paliers sont formés par des éléments distincts du boitier, étant emboités dans des logements prévus à cet effet dans ledit boitier.

Le contact serrant exercé par un palier sur une tige se fait alors généralement au moyen d'au moins une patte flexible issue dudit palier, ladite patte étant rappelée vers l'intérieur par un ressort de manière à prendre appui sur ladite tige.

En outre, les paliers sont réalisés à partir d'un matériau plastique moulé peu sensible à la chaleur et termes de ramollissement et de dilatation.

Ceci permet de garantir un coulissement homogène du boitier sur les tiges quelle que soit la température environnante.

Cependant, le fait de monter des paliers dans le boitier est source de surcoûts de fabrication de l'appui-tête.

L'invention a pour but de pallier cet inconvénient tout en maintenant une qualité de serrage homogène à toute température entre les paliers et les tiges.

A cet effet, l'invention propose un appui-tête de siège de véhicule automobile, ledit appui-tête comprenant :
- deux tiges métalliques parallèles, et séparées l'une de l'autre, destinées à être montées en haut de dossier dudit siège,
- un boitier en matériau plastique moulé d'absorption d'énergie en cas de choc de la tête d'un passager, ledit boitier présentant deux conduits, issus de moulage, chacun desdits conduits recevant une desdites tiges respective en coulissement, de manière à permettre un réglage en hauteur dudit boitier, chacun desdits conduits étant pourvu d'un palier haut et d'un palier bas exerçant tous deux un contact serrant sur chacune desdites tiges,
ledit appui-tête présentant en outre les caractéristiques suivantes :
- lesdits paliers sont moulés d'un bloc avec lesdits conduits et présentent en leur périphérie deux pattes flexibles opposées selon une première direction,
- chacun desdits paliers est pourvu d'un ressort de rappel desdites pattes correspondantes vers lesdites tiges, ledit ressort présentant une forme générale de U ou de C dont chacune des branches vient en appui sur chacune desdites pattes de manière à réaliser un pincement desdites tiges entre lesdites pattes.

Dans cette description, les termes de positionnement dans l'espace (haut, bas, longitudinal, transversal, vertical, latéral,...) sont pris en référence à un appui-tête monté dans le véhicule.

Le terme « axial » est quant à lui considéré relativement à la direction générale d'extension d'une tige.

Avec l'agencement proposé, les paliers sont moulés d'une pièce avec le boitier, ce qui entraîne une réduction du coût de fabrication de l'appui-tête.

Par ailleurs, les branches d'un ressort réalisant un pincement de la tige correspondante entre les pattes du palier correspondant, on est assuré que le serrage réalisé par ledit palier sur ladite tige est assuré de façon homogène sur une grande plage de températures, et ceci quelles que soient les fluctuations dimensionnelles du matériau constitutif du boitier - et donc des paliers - et son ramollissement éventuel à haute température.

D'autres particularités et avantages de l'invention apparaîtront dans la description qui suit, faite en référence aux figures jointes, dans lesquelles :

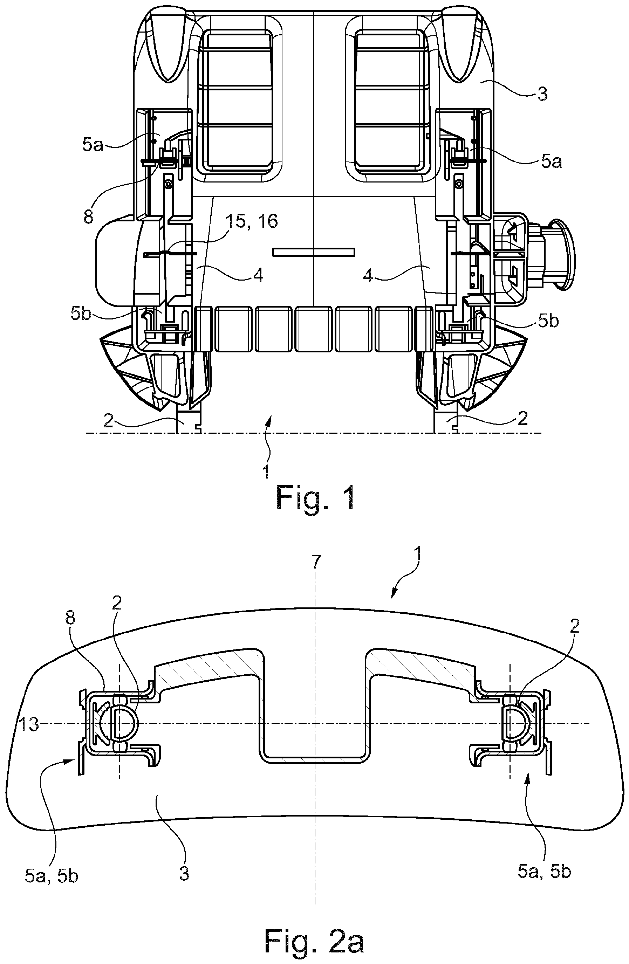

[Fig.1] est une vue de face partielle d'un appui-tête selon une réalisation,
[Fig.2a] et

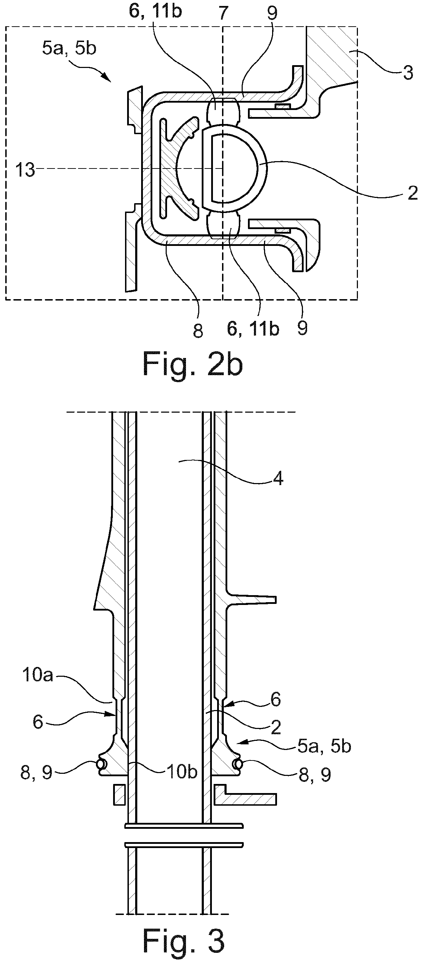

[Fig.2b] sont des vues en coupe de la réalisation de la figure 1 selon un premier plan horizontal, en vue générale (figure 2a) et de détail (figure 2b),
[Fig.3] est une vue en coupe verticale de détail de la réalisation de la figure 1,

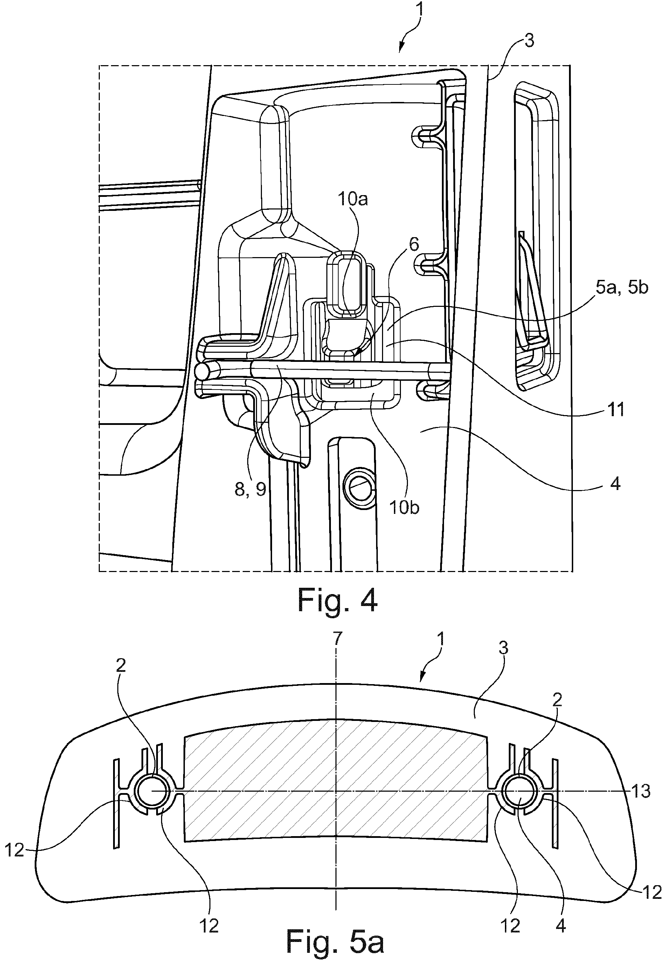

[Fig.4] est une vue en perspective de détail de la réalisation de la figure 1,
[Fig.5a] et

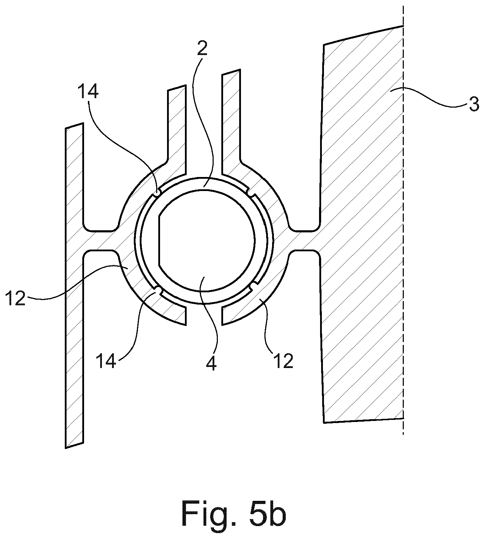

[Fig.5b] sont des vues en coupe de la réalisation de la figure 1 selon un deuxième plan horizontal, en vue générale (figure 5a) et de détail (figure 5b).

En référence aux figures, on décrit un appui-tête 1 de siège de véhicule automobile, ledit appui-tête comprenant :
- deux tiges 2 métalliques parallèles, et séparées l'une de l'autre, destinées à être montées en haut de dossier dudit siège,
- un boitier 3 en matériau plastique moulé d'absorption d'énergie en cas de choc de la tête d'un passager, ledit boitier présentant deux conduits 4, issus de moulage, chacun desdits conduits recevant une desdites tiges respective en coulissement, de manière à permettre un réglage en hauteur dudit boitier, chacun desdits conduits étant pourvu d'un palier haut 5a et d'un palier bas 5b exerçant tous deux un contact serrant sur chacune desdites tiges,
ledit appui-tête présentant en outre les caractéristiques suivantes :
- lesdits paliers sont moulés d'un bloc avec lesdits conduits et présentent en leur périphérie deux pattes flexibles 6 opposées selon une première direction 7,
- chacun desdits paliers est pourvu d'un ressort de rappel 8 desdites pattes correspondantes vers lesdites tiges, ledit ressort présentant une forme générale de U ou de C dont chacune des branches 9 vient en appui sur chacune desdites pattes de manière à réaliser un pincement desdites tiges entre lesdites pattes.

De façon non représenté, le boitier 3 est garni d'un coussin.

Selon la réalisation représentée, les pattes 6 sont reliées au reste du boitier 3 par une première extrémité 10a de manière à définir dans ledit boitier une fente 11 en forme générale de U permettant la flexion desdites pattes vers l'intérieur pour qu'elles s'appuient selon leur deuxième extrémité 10b sur la tige 2 correspondante.

En variante non représentée, on pourrait envisager un rattachement des pattes 6 au reste du boitier 3 par leurs deux extrémités 10a,10b.

Selon la réalisation représentée, les conduits 4 présentent en outre deux zones non flexibles de guidage 12 des tiges 2 en contact non serrant, lesdites zones étant opposées selon une deuxième direction 13 orthogonale à la première direction 7.

Selon la réalisation représentée, la première direction 7 s'étend longitudinalement et la deuxième direction 13 transversalement.

Selon la réalisation représentée, les zones de guidage 12 sont décalées axialement par rapport aux paliers 5a,5b.

Selon la réalisation représentée, les zones de guidage 12 sont pourvues de nervures axiales 14 de guidage saillant vers l'intérieur - lesdites nervures étant au nombre de deux par zone 12 dans la réalisation représentée.

Un tel agencement permet de disposer de crans de réglage en hauteur, décrits plus loin, débouchant latéralement, donc n'entrant pas en interférence entre lesdits crans et les pattes 6 lors d'une manœuvre de coulissement du boitier 3, ce qui pourrait nuire au bon coulissement.

Une telle orientation des crans de réglage est propice à un verrouillage optimisé du boitier 3 en hauteur en cas de choc violent d'une tête de passager en regard dudit boitier.

De façon non visible sur les figures, l'appui-tête 1 comprend en outre un dispositif de verrouillage du boitier 3 par rapport aux tiges 2 selon une pluralité de positions verticales, de manière à verrouiller le réglage en hauteur choisi pour ledit boitier, ledit dispositif comprenant :
- une tige crantée pourvue de crans de réglage s'étageant axialement,
- une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

## Revendications

1. Appui-tête (1) de siège de véhicule automobile, ledit appui-tête comprenant :
• deux tiges (2) métalliques parallèles, et séparées l'une de l'autre, destinées à être montées en haut de dossier dudit siège,
• un boitier (3) en matériau plastique moulé d'absorption d'énergie en cas de choc de la tête d'un passager, ledit boitier présentant deux conduits (4), issus de moulage, chacun desdits conduits recevant une desdites tiges respective en coulissement, de manière à permettre un réglage en hauteur dudit boitier, chacun desdits conduits étant pourvu d'un palier haut (5a) et d'un palier bas (5b) exerçant tous deux un contact serrant sur chacune desdites tiges,
ledit appui-tête étant **caractérisé en ce que** :
• lesdits paliers sont moulés d'un bloc avec lesdits conduits et présentent en leur périphérie deux pattes flexibles (6) opposées selon une première direction (7),
• chacun desdits paliers est pourvu d'un ressort de rappel (8) desdites pattes correspondantes vers lesdites tiges, ledit ressort présentant une forme générale de U ou de C dont chacune des branches (9) vient en appui sur chacune desdites pattes de manière à réaliser un pincement desdites tiges entre lesdites pattes.

2. Appui-tête selon la revendication 1, **caractérisé en ce que** les pattes (6) sont reliées au reste du boitier (3) par une première extrémité (10a) de manière à définir dans ledit boitier une fente (11) en forme générale de U permettant la flexion desdites pattes vers l'intérieur pour qu'elles s'appuient selon leur deuxième extrémité (10b) sur la tige (2) correspondante.

3. Appui-tête selon l'une des revendications 1 ou 2, **caractérisé en ce que** les conduits (4) présentent en outre deux zones non flexibles de guidage (12) des tiges (2) en contact non serrant, lesdites zones étant opposées selon une deuxième direction (13) orthogonale à la première direction (7).

4. Appui-tête selon l'une quelconque des revendications 1 à 3, **caractérisé en ce que** la première direction (7) s'étend longitudinalement et la deuxième direction (13) transversalement.

5. Appui-tête selon l'une des revendications 3 ou 4, **caractérisé en ce que** les zones de guidage (12) sont décalées axialement par rapport aux paliers (5a,5b).

6. Appui-tête selon l'une quelconque des revendications 3 à 5, **caractérisé en ce que** les zones de guidage (12) sont pourvues de nervures axiales (14) de guidage saillant vers l'intérieur.

7. Appui-tête selon l'une quelconque des revendications 1 à 6, **caractérisé en ce qu'**il comprend en outre un dispositif de verrouillage du boitier (3) par rapport aux tiges (2) selon une pluralité de positions verticales, de manière à verrouiller le réglage en hauteur choisi pour ledit boitier, ledit dispositif comprenant :
• une tige crantée pourvue de crans de réglage s'étageant axialement,
• une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

## Patentansprüche

1. Kopfstütze (1) für Kraftfahrzeugsitz, wobei die Kopfstütze umfasst:
• zwei parallele, voneinander getrennte Metallstangen (2), die zur Anbringen oben auf der Rückenlehne des Sitzes bestimmt sind,
• ein Gehäuse (3) aus geformtem Energieabsorptions-Kunststoffmaterial für den Fall eines Aufpralls des Kopfes eines Insassen, wobei das Gehäuse zwei geformte Führungen (4) aufweist, wobei jede der Führungen eine der jeweiligen Stangen gleitend derart aufnimmt, dass eine Höheneinstellung des Gehäuses ermöglicht wird, wobei jede der Führungen mit einem oberen Lager (5a) und einem unteren Lager (5b) ausgestattet ist, die beide einen Spannkontakt auf jede der Stangen ausüben,
wobei die Kopfstütze **dadurch gekennzeichnet ist, dass**:
• die Lager in einem Block mit den Führungen geformt sind und an ihrem Umfang zwei flexible Füße (6) aufweisen, die gemäß einer ersten Richtung (7) gegenüberliegen,
• jedes der Lager mit einer Rückstellfeder (8) der entsprechenden Füße zu den Stangen ausgestattet ist, wobei die Feder eine allgemeine U- oder C-Form aufweist, von der sich jeder der Schenkel (9) auf jedem der Füße derart abstützt, dass die Stangen zwischen den Füßen eingeklemmt werden.

2. Kopfstütze nach Anspruch 1, **dadurch gekennzeichnet, dass** die Füße (6) mit dem restlichen Gehäuse (3) durch ein erstes Ende (10a) derart verbunden sind, dass in dem Gehäuse ein U-förmiger Schlitz (11) definiert wird, der die Biegung der Füße nach innen erlaubt, damit sie sich gemäß ihrem zweiten Ende (10b) auf der entsprechenden Stange (2) abstützen.

3. Kopfstütze nach einem der Ansprüche 1 oder 2, **dadurch gekennzeichnet, dass** die Führungen (4) ferner zwei nicht flexible Führungszonen (12) der Stangen (2) in nicht spannendem Kontakt aufweisen, wobei die Zonen gemäß einer zweiten, zu der ersten Richtung (7) orthogonalen Richtung (13) gegenüberliegen.

4. Kopfstütze nach einem der Ansprüche 1 bis 3, **dadurch gekennzeichnet, dass** sich die erste Richtung (7) längs und die zweite Richtung (13) quer erstreckt.

5. Kopfstütze nach einem der Ansprüche 3 oder 4, **dadurch gekennzeichnet, dass** die Führungszonen (12) in Bezug auf die Lager (5a, 5b) axial versetzt sind.

6. Kopfstütze nach einem der Ansprüche 3 bis 5, **dadurch gekennzeichnet, dass** die Führungszonen (12) mit axialen, nach innen hervorstehenden Führungsrippen (14) versehen sind.

7. Kopfstütze nach einem der Ansprüche 1 bis 6, **dadurch gekennzeichnet, dass** sie ferner eine Verriegelungsvorrichtung des Gehäuses (3) in Bezug auf die Stangen (2) gemäß einer Vielzahl vertikaler Positionen umfasst, so dass die für das Gehäuse gewählte Höheneinstellung verriegelt wird, wobei die Vorrichtung umfasst:
• eine gekerbte Stange mit axial gestuften Einstellungskerben,
• einen in Bezug auf das Gehäuse zwischen einer Verriegelungsposition, in dem der Vorsprung in einer der Kerben eingerastet ist, und einer Entriegelungsposition, in der sich der Vorsprung aus der Kerbe zurückzieht, um das Gleiten der gekerbten Stange freizugeben, beweglich angebrachten Verriegelungsvorsprung.

## Claims

1. Headrest (1) for a motor vehicle seat, said headrest comprising:
• two parallel metal rods (2), separated from one another, intended to be mounted at the top of the backrest of said seat,
• a moulded plastic material casing (3) for absorbing energy in case of impact of the head of a passenger, said casing having two conduits (4), coming from moulding, each of said conduits receiving one of said respective sliding rods, so as to make it possible for a height adjustment of said casing, each of said conduits being provided with a top bearing (5a) and a bottom bearing (5b), both exerting a clamping contact on each of said rods,
said headrest being **characterised in that**:
• said bearings are moulded from a block with said conduits and have, in the periphery thereof, two opposite flexible tabs (6) along a first direction (7),
• each of said bearings is provided with a return spring (8) of said corresponding tabs to said rods, said spring having a general U- or C-shape, each of the branches (9) thereof bearing on each of said tabs so as to achieve a pinching of said rods between said tabs.

2. Headrest according to claim 1, **characterised in that** the tabs (6) are connected to the remainder of the casing (3) by a first end (10a) so as to define in said casing a generally U-shaped slot (11) making it possible for the bending of said tabs inwards such that they are born according to the second end (10b) thereof on the corresponding rod (2).

3. Headrest according to one of claims 1 or 2, **characterised in that** the conduits (4) furthermore have two non-flexible zones (12) for guiding the rods (2) in non-clamping contact, said zones being opposite along a second direction (13) orthogonal to the first direction (7).

4. Headrest according to any one of claims 1 to 3, **characterised in that** the first direction (7) extends longitudinally and the second direction (13) transversally.

5. Headrest according to one of claims 3 or 4, **characterised in that** the guiding zones (12) are axially offset with respect to the bearings (5a, 5b).

6. Headrest according to any one of claims 3 to 5, **characterised in that** the guiding zones (12) are provided with axial guiding ridges (14) protruding inwards.

7. Headrest according to any one of claims 1 to 6, **characterised in that** it further comprises a device for locking the casing (3) with respect to the rods (2) according to a plurality of vertical positions, so as to lock the height adjustment selected for said casing, said device comprising:
• a notched rod provided with axially sloping adjustment notches,
• a locking protrusion mounted mobile with respect to said casing between a locking position, where said protrusion is inserted in one of said notches, and an unlocking position, where said protrusion is removed from said notch in order to release the sliding of said notched rod.
